Europäisches Patentamt

European Patent Office

Office européen des brevets

(11) Veröffentlichungsnummer: **0 335 138**
**A1**

(12) **EUROPÄISCHE PATENTANMELDUNG**

(21) Anmeldenummer: 89104027.1

(51) Int. Cl.⁴: **B60H 1/00**

(22) Anmeldetag: 07.03.89

(30) Priorität: 07.03.88 DE 8803054 U

(43) Veröffentlichungstag der Anmeldung:
04.10.89 Patentblatt 89/40

(84) Benannte Vertragsstaaten:
AT BE CH DE ES FR GB IT LI LU NL SE

(71) Anmelder: WÖLFLE GMBH
Biberacher Strasse 63
D-7955 Ochsenhausen 1(DE)

(72) Erfinder: Wickfelder, Frank
Sachsenring 74
D-7950 Biberach a.d. Riss 2(DE)
Erfinder: Keller, Werner
Brühlstrasse 6
D-7959 Hürbel(DE)
Erfinder: Binanzer, Rolf
Klosterstrasse 31
D-7956 Rot a.d. Rot(DE)

(74) Vertreter: Gossel, Hans K., Dipl.-Ing. et al
Rechtsanwälte E. Lorenz - B. Seidler
Dipl.-Ing. H. K. Gossel Dr. I. Philipps Dr. P.B.
Schäuble Dr. S. Jackermeier - Dipl.-Ing. A.
Zinnecker
Widenmayerstrasse 23 D-8000 München
22(DE)

(54) **Heizgerät.**

(57) Ein Heizgerät, vorzugsweise für Kraftfahrzeuge, bestehend aus einem Gehäuse mit Öffnungen zum Eintritt von Umluft- und/oder Frischluft, und zu deren Austritt, gegebenenfalls nach deren Erwärmung, in dem ein Gebläse und ein Wärmetauscher angeordnet sind, vorzugsweise Heiz-Klima-Gerät mit einem zusätzlich in dem Gehäuse vorgesehenen Verdampfer eines Kälteaggregates, soll sich in einfacher Weise von Heiz-auf Klima- bzw. Lüftungsbetrieb umstellen lassen, ohne daß umfangreiche Luftführungskanäle vorgesehen werden müssen.

Hierzu wird eine Steuereinrichtung für das Gebläse (13) vorgesehen, durch die dessen Druckseite von der über den Wärmetauscher (3) führenden Austrittsöffnung zu einer Austrittsöffnung (8) für Frisch- und/oder klimatisierte Luft unter Umgebung des Wärmetauschers (3) und umgekehrt umstellbar ist.

Dieses Gerät läßt sich vorteilhaft in Kraftfahrzeugen in der Weise installieren, daß die Austrittsöffnung für erwärmte Luft beim Heizbetrieb im Bereich des Bodens und die Austrittsöffnung für klimatisierte Luft oder Frischluft im Bereich der Decke der Kabine liegen. Durch die Anordnung der Austrittsöffnungen in gegenüberliegenden Bereichen kann ein zusätzlicher Aufwand für Luftführungskanäle gering gehalten werden. Durch die Umsteuerung des Gebläses läßt sich das Gerät zudem mit gutem Wirkungsgrad betreiben.

FIG. 1

# Heizgerät

Die Erfindung betrifft ein Heizgerät, vorzugsweise für Kraftfahrzeuge, bestehend aus einem Gehäuse mit Öffnungen zum Eintritt von Umluft- und/oder Frischluft und zu deren Austritt gegebenenfalls nach deren Erwärmung, in dem ein Gebläse und ein Wärmetauscher angeordnet sind, vorzugsweise Heiz-Klima-Gerät mit einem zusätzlich in dem Gehäuse vorgesehenen Verdampfer eines Kälteaggregates.

Heiz- bzw. Klimageräte dieser Art werden üblicherweise für Kraftfahrzeuge in unterschiedlichen Ausführungsformen eingesetzt. Der Aufbau dieser Geräte ist einfach und diese können mit verschiedenen Mischungsverhältnisse betrieben werden, nämlich vom reinen Außenluftbetrieb bis zum maximalen Umluftbetrieb. Das Mischungsverhältnis von Außenluft und Umluft kann durch Betätigung entsprechender Klappen eingetstellt werden.

Die Anforderungen an die Luftführung sind bei Heiz- und Klima-bzw. reinem Lüftungsbetrieb unterschiedlich. Die Dichteunterschiede der Luft bewirken ein Aufsteigen der wärmeren und ein Absinken der kälteren Luft, so daß im Normalbetrieb der Anlage die Warmluft in den Fußraum und die Kaltluft bzw. die Frischluft in den Dachbereich der Kabine transportiert werden sollte.

Für größere Kabinen, wie sie beispielsweise bei Baumaschinen verwendet werden, sind deshalb umfangreiche Luftführungskanäle erforderlich, die die Leistung der Anlage mindern, so daß diese entsprechend größer dimensioniert werden muß. Bekannt ist es weiterhin, auf größere Anlagen zu verzichten und stattdessen eine separate Klimaanlage im Dachbereich der Kabine zu montieren.

Aufgabe der Erfindung ist es, ein Heiz-Lüftungs-bzw. ein Heiz-Klima-Gerät der eingangs angegebenen Art zu schaffen, das sich in einfacher Weise von Heiz - auf Klima- bzw. Lüftungsbetrieb umstellen läßt, ohne daß umfangreichere Luftführungskanäle vorgesehen werden müßten.

Erfindungsgemäß wird diese Aufgabe bei einem Gerät der gattungsgemäßen Art dadurch gelöst, daß eine Steuereinrichtung für das Gebläse vorgesehen ist, durch die dessen Druckseite von der über den Wärmetauscher führenden Austrittsöffnung zu einer Austrittsöffnung für Frisch- und/oder klimatisierte Luft unter Umgehung des Wärmetauschers und umgekehrt umstellbar ist. Dieses bekannte Gerät läßt sich in Kraftfahrzeugen und insbesondere in Kabinen von Baumaschinen in der Weise installieren, daß die Austrittsöffnung für erwärmte Luft beim Heizbetrieb im Bereich des Bodens und die Austrittsöffnung für klimatisierte Luft oder Frischluft im Bereich der Decke der Kabine liegen. Durch die Anordnung der Austrittsöffnungen in gegenüberliegenden Bereichen kann ein zusätzlicher Aufwand für Luftführungskanäle gering gehalten werden. Durch die Umsteuerung des Gebläses läßt sich das Gerät zudem mit gutem Wirkungsgrad betreiben.

In weiterer Ausgestaltung der Erfindung ist vorgesehen, daß das Gehäuse aus zwei winkelig zueinander stehenden Gehäuseteilen besteht, daß das Gebläse in dem Winkelbereich des Gehäuses um ein Querachse schwenkbar gelagert und in zwei Schwenkstellungen feststellbar ist, in denen die Druckseite des Gebläses einmal eine Eintrittsöffnung des Gehäuseteils in dem der Wärmetauscher gehaltert ist, und zum anderen an eine Eintrittsöffnung des anderen Gehäuseteils angeschlossen ist, der mit den Austrittsöffnungen für Frischluft und/oder klimatisierte Luft versehen ist, und daß eine Einrichtung zum Verscwenken des Gebläses vorgesehen ist.

Besteht das erfindungsgemäße Gerät aus einem Heiz-Klima-Gerät ist in dem anderen Gehäuseteil der Verdampfer angeordnet. Dieser ragt zweckmäßigerweise nach oben und transportiert die klimatisierte Luft in den Deckenbereich des Fahrzeugs bzw. der Kabine. .

Zweckmäßigerweise stehen die beiden Gehäuseteile rechtwinkelig zueinander, wobei der Wärmetauscher in dem horizontal liegenden Gehäuseteil angeordnet ist und das Gebläse um 90 Grad schwenkbar ist.

Der mit dem Wärmetauscher versehene Gehäuseteil kann an seiner Stirnseite mit den Warmluftaustrittsöffnungen und an seinen Seitenteilen mit Umluftansaugöffnungen versehen sein, die bei Innendruck geschlossen sind. Wird aus den Warmluftaustrittsöffnungen Warmluft ausgeblasen, sind wegen des Überdrucks in dem Gehäuseteil die Umluftansaugöffnungen geschlossen. Arbeitet das Gerät jedoch im Klima-oder Frischluftblasbetrieb, kann Umluft aus den Umluft-Ansaugöffnungen angesaugt werden. Diese können beispielsweise aus schwenkbar gelagerten Lamellen bestehen, die bei einem Unterdruck in dem Gehäuseteil öffnen und gleichsam die Wirkung von Rückschlagklappenventilen haben.

In dem Gehäuseteil mit dem gegebenenfalls vorgesehenen Verdampfer oder in dem das Gebläse halternden Gehäuseteil kann eine durch eine Klappe verschließbare Außenluftöffnung vorgesehen sein.

Zweckmäßigerweise ist das Gehäuseteil mit den Austrittsöffnungen für Frisch und/oder klimatisierte Luft mit zueinander parallelen, schwenkbaren Lamellen versehen, durch die sich diese verschließen oder deren düsenartiger Durchtrittsquerschnitt verändern läßt.

In weiterer Ausgestaltung der Erfindung ist vorgesehen, daß die die Außenluftöffnung verschließende Klappe zwischen ihrer die Außenluftöffnung verschließenden und ihrer die Eintrittsöffnung für das Gehäuseteil mit dem Verdampfer bzw. ihrer die Austrittsöffnung für Frischluft verschließenden Stellung verschwenkbar ist.

Als Gebläse ist zweckmäßigerweise ein Radialgebläse vorgesehen.

Ausführungsbeispiele der Erfindung werden nachstehend anhand der Zeichnung näher erläutert. In dieser zeigt

Fig.1 einen Schnitt durch ein Heiz-Klima-Gerät in schematischer Darstellung im Klimabetrieb,

Fig.2 das Gerät nach Fig.1 im Heizbetrieb und

Fig.3 eine der Fig.2 entsprechende Darstellung eines nur für Heiz- und Lüftungszwecke eingerichteten Gerätes im Heizbetrieb.

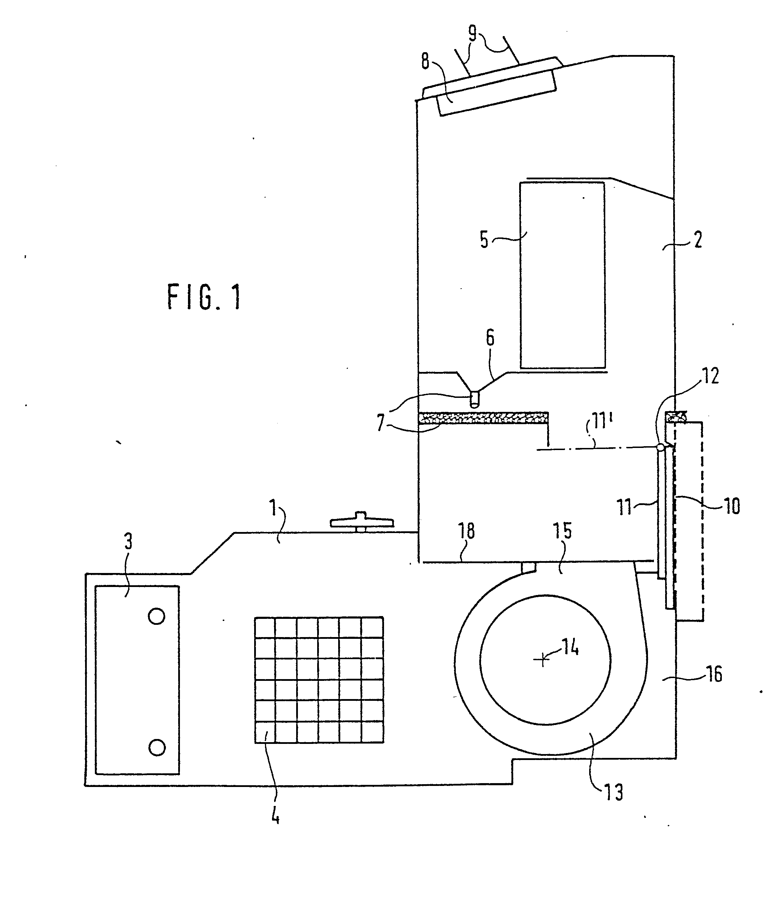

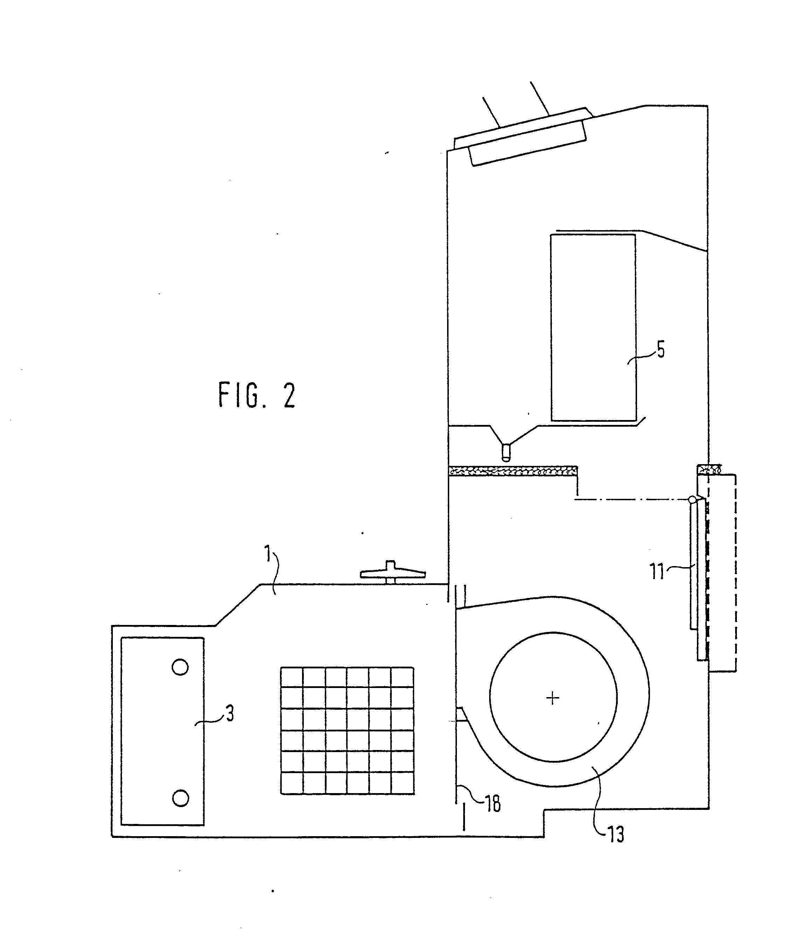

Das Heiz-Klima-Gerät nach den Fig.1 und 2 besteht aus einem horizontalen Gehäuseteil 1, das rechtwinkelig mit einem vertikalen Gehäuseteil 2 verbunden ist. Das Gehäuseteil 1 ist an seiner linken Stirnseite mit Austrittsöffnungen für erwärmte Luft versehen. Vor diesen Austrittsöffnungen befindet sich der Wärmetauscher 3, durch dessen Rohrschlangen erwärmtes Kühlwasser oder erwärmtes Hydrauliköl fließen. In den Seitenwänden des im Querschnitt rechteckigen Gehäuseteils 1 befinden sich Lufteintrittsöffnungen 4, die mit einem Verschluß versehen sind, der sich bei Innendruck schließt und bei einem Unterdruck im Innern des Gehäuseteils 1 öffnet.

Der vertikale Gehäuseteil 2 hat vorzugsweise ebenfalls einen im wesentlichen rechteckigen Querschnitt. Im Innern des Gehäuseteils 2 ist im Strömungsweg der Luft der Verdampfer 5 eines Kälteaggregats angeordnet. Unter dem Verdampfer 5 befindet sich eine Wanne 6 zum Auffangen kondensierten Wassers. Dieses Wasser wird durch Leitungen 7 abgeführt.

An der oberen Stirnseite des Gehäuseteils 2 befindet sich eine Austrittsdüse 8 für klimatisierte Luft. Der Durchtrittsquerschnitt dieser Austrittsdüse 8 ist durch lamellenartige Klappen 9 einstellbar.

In ihrem unteren Bereich ist der Gehäuseteil 2 mit einer Öffnung 10 zum Eintritt von Außenluft versehen. Diese Außenlufteintrittsöffnung 10 ist durch eine Klappe 11 verschließbar, die um die Gelenkachse 12 schwenkbar gelagert ist. Die Klappe 11 ist mit einer nicht dargestellten Betätigungseinrichtung versehen, von der sie in ihrer die Außenluftöffnung verschließenden Stellung in ihre Stellung 11' verschwenkbar ist, in der sie den Luftdurchtritt durch das Gehäuseteil 2 verschließt.

In dem Winkelbereich zwischen den Gehäuseteilen 1,2 ist eine Kammer 12 vorgesehen, in der ein Radialgebläse 13 angeordnet ist. Das Radialgebläse 13 ist in nicht dargestellter Weise um seine horizontale Achse 14 um 90° schwenkbar, so daß die Druckseite des Gebläses wahlweise an die Eintrittsöffnung des Gehäuseteils 2 mit dem Verdampfer oder an die Eintrittsöffnung des Gehäuseteils 1 mit dem Wärmetauscher 3 angeschlossen werden kann. Die Verschwenkung des Gebläses um 90° kann durch einen Bowdenzug oder andere Getriebemittel erfolgen.

In der aus Fig. 1 ersichtlichen Stellung arbeitet die Anlage im Klimabetrieb. In diesem Betriebszustand wird die Umluft über die seitlich an dem Gehäuseteil 1 angeordneten Lufteinlässe 4 angesaugt. Zusätzliche Umluft kann durch die Warmluftaustrittsöffnungen an der Stirnseite des Gehäuseteils 1 angesaugt werden, wenn diese nicht geschlossen worden sein sollten. Das Gebläse 13 fördert die angesaugte Umluft über den Verdampfer 5 nach oben. Die klimatisierte Luft tritt dann aus den Düsen 8 aus, deren Klappen 9 mit einer Einstelleinrichtung versehen sein können. Da der Staudruck klein ist, kann eine ausreichende klimatisierte Luftmenge in den Dachbereich der Kabine gebracht werden, so daß durch Luftzirkulation eine genügend gleichmäßige Raumlufttemperatur erreicht werden kann. In dem aus Fig.1 ersichtlichen Klimabetrieb verschließt die Klappe 11 die Außenluftöffnung 10.

Aus Fig.2 ist der Heizbetrieb der Anlage ersichtlich. In diesem Betriebszustand ist das Gebläse 13 aus der in Fig.1 ersichtlichen Stellung um 90 Grad in der Weise gedreht, daß dessen Druckseite an die Eintrittsöffnung des Gehäuseteils 1 angeschlossen ist. Um eine einfache Umschaltung zu ermöglichen, kann die Druckluftaustrittsöffnung des Gebläses 13 mit einer diese umgebenden Stauplatte 18 versehen sein, die in der dargestellten Weise nach ihrem Verschwenken jeweils den Querschnitt des Gehäuseteils 1 bzw. des Gehäuseteils 2 bis auf die Auslaßöffnung des Gebläses schließt. Bei dem Heizbetrieb nach Fig.2 erfolgt die Luftansaugung je nach Stellung der Klappe 11 über die Außenluftöffnung 10, das heißt es wird Frischluft angesaugt, oder es wird Umluft über die Düsen 8 angesaugt. Das Gebläse 13 führt die durch den Wärmetauscher 3 erwärmte Luft in den Fußbereich der Kabine, wobei eine Weiterleitung der Luft zu den Fenstern durch zusätzliche Luftkanäle erfolgen kann.

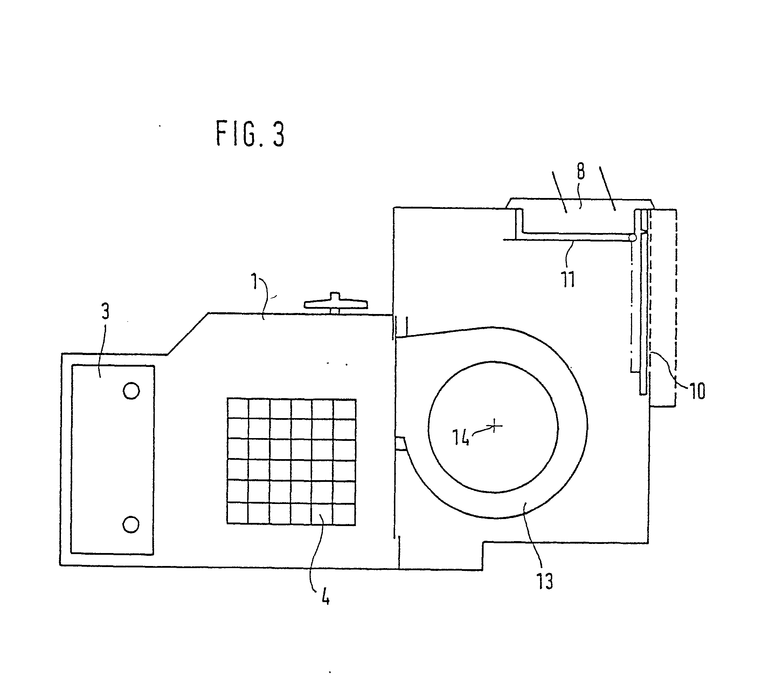

Bei dem Ausführungsbeispiel nach Fig. 3 ist der zweite Gehäuseteil verkürzt und weist keinen einen Verdampfer enthaltenden Klimaaufsatz auf. Das Gerät nach Fig. 3 kann als reines Heizgerät oder zu Lüftungszwecken verwendet werden.

Die Bedienung der Luftklappen sowie die Verstellung des schwenkbar gelagerten Gebläsemotors kann mechanisch, beispielsweise über Bowdenzüge, oder elektromechanisch durch Stellmotoren erfolgen.

Zusätzlich kann das Klimagerät mit Filtern und Luftbefeuchtungseinrichtungen sowie einem Schalldämpfer versehen sein. Diese Bauteile sind üblicher Ausführung und werden daher nicht näher beschrieben.

## Ansprüche

1. Heizgerät, vorzugsweise für Kraftfahrzeuge, bestehend aus einem Gehäuse mit Öffnungen zum Eintritt von Umluft- und/oder Frischluft und zu deren Austritt gegebenenfalls nach deren Erwärmung, in dem ein Gebläse und ein Wärmetauscher angeordnet sind, vorzugsweise Heiz-Klima-Gerät mit einem zusätzlich in dem Gehäuse vorgesehenen Verdampfer eines Kälteaggregates, **dadurch gekennzeichnet,** daß eine Steuereinrichtung für das Gebläse (13) vorgesehen ist, durch die dessen Druckseite von der über den Wärmetauscher (3) führenden Austrittsöffnung zu einer Austrittsöffnung (8) für Frisch- und/oder klimatisierte Luft unter Umgehung des Wärmetauschers (3) und umgekehrt umstellbar ist.

2. Heizgerät nach Anspruch 1, dadurch gekennzeichnet, daß das Gehäuse aus zwei winkelig zueinander stehenden Gehäuseteilen (1,2) besteht daß das Gebläse (13) in dem Winkelbereich des Gehäuses um eine Querachse (14) schwenkbar gelagert und in zwei Schwenkstellungen feststellbar ist, in denen die Druckseite des Gebläses (13) einmal an eine Eintrittsöffnung des Gehäuseteils (1) in dem der Wärmetauscher (3) gehaltert ist und zum anderen an eine Eintrittsöffnung des anderen Gehäuseteils (2) angeschlossen ist, der mit den Austrittsöffnungen (8) für Frischluft und/oder klimatisierte Luft versehen ist, und daß eine Einrichtung zum Verschwenken des Gebläses (13) vorgesehen ist.

3. Heizgerät nach Anspruch 1 oder 2, dadurch gekennzeichnet, daß in dem anderen Gehäuseteil (2) der Verdampfer (5) angeordnet ist.

4. Heizgerät nach einem der Ansprüche 1 bis 3, dadurch gekennzeichnet, daß die beiden Gehäuseteile (1,2) rechtwinkelig zueinander stehen und der Wärmetauscher (3) in dem horizontal liegenden Gehäuseteil (1) angeordnet ist und daß das Gebläse (13) um 90° schwenkbar ist.

5. Heizgerät nach einem der Ansprüche 1 bis 4, dadurch gekennzeichnet, daß der mit dem Wärmetauscher (3) versehene Gehäuseteil (1) an seiner Stirnseite mit Warmluftaustrittsöffnungen und an seinen Seitenteilen mit Umluftansaugöffnungen (4), die bei Innendruck geschlossen sind, versehen ist.

6. Heizgerät nach einem der Ansprüche 1 bis 5, dadurch gekennzeichnet, daß in dem Gehäuseteil (2) mit dem gegebenenfalls vorgesehenen Verdampfer (5) oder in dem das Gebläse (13) halternden Gehäuseteil eine durch eine Klappe (11) schließbare Außenluftöffnung (10) vorgesehen ist.

7. Heizgerät nach einem der Ansprüche 1 bis 6, dadurch gekennzeichnet, daß das Gehäuseteil (2) mit den Austrittsöffnungen (8) für Frisch- und oder klimatisierte Luft mit zueinander parallelen, schwenkbaren Lamellen (9) versehen ist, durch die sich diese schließen oder deren düsenartiger Durchtrittsquerschnitt verändern läßt.

8. Heizgerät nach einem der Ansprüche 1 bis 7, dadurch gekennzeichnet, daß die die Außenluftöffnung (10) verschließendene Klappe (11) zwischen ihrer die Außenluftöffnung verschließenden und ihrer die Eintrittsöffnung für das Gehäuseteil (2) mit dem Verdampfer (5) bzw. ihrer die Austrittsöffnung (8) für Frischluft verschließenden Stellung verschwenkbar ist.

9. Heizgerät nach einem der Ansprüche 1 bis 8, dadurch gekennzeichnet, daß das Gebläse ein Radialgebläse ist.

FIG.1

FIG. 2

# FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 163 480 (DELANEY GALLAY LTD) * Insgesamt * | 1-3,9 | B 60 H 1/00 |
| A | | 4 | |
| A | DE-A-2 937 215 (KLÖCKNER-HUMBOLDT-DEUTZ) * Insgesamt * | 1-4,9 | |
| A | FR-A-1 409 936 (CHAUSSON) * Insgesamt * | 1,9 | |
| A | FR-A-2 516 213 (SUDDEUTSCHE KUHLERFABRIK JULIUS FR. BEHR) * Anspruch 1; Figuren 1,2 * | 1,9 | |

**RECHERCHIERTE SACHGEBIETE (Int. Cl.4)**

B 60 H
B 60 P
F 04 D

Der vorliegende Recherchenbericht wurde für alle Patentansprüche erstellt

| Recherchenort | Abschlußdatum der Recherche | Prüfer |
|---|---|---|
| DEN HAAG | 07-07-1989 | CZAJKOWSKI A.R. |